# EUROPÄISCHE PATENTSCHRIFT

(11) **EP 0 800 228 B1**
(45) Veröffentlichungstag und Bekanntmachung des Hinweises auf die Patenterteilung: **02.10.2002**
(21) Anmeldenummer: 96120312.2
(22) Anmeldetag: 18.12.1996
(51) Int. Cl.: H01Q 1/12

(54) **Antennenverstärker auf einer Fensterscheibe**
Antenna amplifier on a window pane
Amplificateur d'antenne sur un carreau de fenêtre

(30) Priorität: 01.04.1996 DE 19612958
(43) Veröffentlichungstag der Anmeldung: 08.10.1997
(73) Patentinhaber: FUBA Automotive GmbH & Co. KG, 31162 Bad Salzdetfurth (DE)
(72) Erfinder: Lindenmeier, Heinz, 82152 Planegg (DE); Fuchs, Andreas, Bloomfield Hills, Mi. 48304 (US)

(56) Entgegenhaltungen:
- EP-A- 0 386 678
- EP-A- 0 392 969
- EP-A- 0 506 334
- EP-A- 0 608 180
- EP-A- 0 629 018
- DE-A- 4 307 232
- DE-A- 4 401 819
- GB-A- 1 403 829
- US-A- 5 428 830

## Beschreibung

Die Erfindung bezieht sich auf eine Fensterscheibenantenne für die vorzugsweise Anwendung in Kraftfahrzeugen im Frequenzbereich für den Meter- und Dezimeterwellenbereich. Vorzugsweise kommen solche Antennen zur Anwendung für den UKW- und LMK-Rundfunkempfang sowie für den terrestrischen Fernsehempfang. Antennen dieser Art sind u.a. bekannt als Windschutzscheibenantennen in der EP 0 124 055 B1 wie auch aus der DE 3410415 A1 sowie aus der DE 3618452 A1. Bei all diesen Antennen befinden sich Antennenleiter auf der Fensterscheibe aufgedruckt, oder eingelegt in laminiertes Glas. Alle Antennen haben gemeinsam, daß sich die Antennenleiteranschlußstellen am Rand der in einem leitenden Rahmen, dargestellt durch die leitende Fahrzeugkarosserie, eingebrachten Fensterscheibe befinden. Nach gängiger Technik werden diese Antennenanschlußstellen über möglichst kurze Zuleitungen mit einer elektrischen Baueinheit verbunden, deren Masseverbindung möglichst kurz mit der leitenden Berandung der Heckscheibe verbunden ist. Die elektrische Baueinheit, häufig ein Antennenverstärker, ist an ihrem Ausgang mit dem HF-Kabel verbunden, welches die Signale zum Empfänger weiterleitet. Die elektrische Baueinheit ist in der Regel in der Nähe dieser Masseverbindung an der Fahrzeugkarosserie mechanisch befestigt; häufig wird über diese Montageverbindung auch die Masseverbindung mit der Fahrzeugkarosserie hergestellt.

Diese Form der Anbringung der elektrischen Baueinheit an der Fahrzeugkarosserie ist teuer und ist bei der Serienherstellung von Kraftfahrzeugen umständlich und erfordert auf seiten des Karosseriebaus Maßnahmen - wie z.B. Bolzen oder Loch - zur Befestigung dieser Baueinheit. Wesentlich kostengünstiger und für die Serienherstellung vorteilhafter ist die Anbringung einer miniaturisiert ausgeführten elektrischen Baueinheit auf der Fensterscheibe an derem Rand, wofür in der Regel im Bereich des Schwarzdrucks am Rande des Fensters hinreichend Platz ist.

Eine Antennenanlage dieser Art ist bekannt aus EP-A-392969. Diese Druckschrift ist für die vorliegende Erfindung als der nächstliegende Stand der Technik anzusehen. In ihr ist ein "Scheibenantennensystem mit Antennenverstärker" behandelt, welches die im Oberbegriff des Anspruchs 1 genannten Merkmale aufweist. Insbesondere ist am Rande der Fensterscheibe eines Kraftfahrzeuges eine elektrische Baueinheit befestigt, die auf der einen Seite mit der Antenne, auf der anderen Seite mit einem zum Empfangs- bzw. Sendegerät führenden HF-Kabel verbunden ist. Die Masseverbindung wird durch eine galvanische Verbindung des Aussenmantels des von der elektrischen Baueinheit wegführenden HF-Kabels mit der Fahrzeugkarosserie bewerkstelligt. Auf die hier auftretenden Schwierigkeiten, eine ausreichend kurze niederohmige Erdung (Masseverbindung) zu erzielen, wird hier hingewiesen.

Für die Gestaltung einer hochfrequenztechnisch definierten Antennenanlage ist es im allgemeinen notwendig, die Hochfrequenz-Impedanz, welche sich zwischen dem Antennenleiteranschlußpunkt und einem benachbarten HF-Massebezugspunkt einstellt, definiert mit dem Eingang der elektrischen Baueinheit hochfrequenzmäßig zu verbinden.

Aufgabe der Erfindung ist es deshalb, bei einer Antennenanlage nach dem Oberbegriff des Anspruchs 1 eine elektrische Baueinheit als hochfrequenztechnisches Bindeglied zwischen den auf der Fensterscheibe befindlichen Antennenleitern und dem HF-Kabel zu schaffen, wobei diese Baueinheit auf der Fensterscheibe befestigt ist, und eine hochfrequenzmäßig möglichst definierte, jedoch berührungslose, das heißt nichtgalvanische, Masseverbindung zur Fahrzeugkarosserie, und zwar in unmittelbarer Nähe zum Anbringungsort der elektrischen Baueinheit, zu ermöglichen.

Die Aufgabe wird erfindungsgemäß bei einer Antennenanlage nach dem Oberbegriff des Anspruchs 1 gelöst durch die kennzeichnenden Merkmale des Anspruchs 1.

Eine solche Antenne besitzt den besonderen Vorteil, daß die elektrische Baueinheit 45 mit dem HF-Kabel 41 elektrisch und mechanisch verbunden werden kann und als von der Karosserie mechanisch losgelöste Einheit in das Fahrzeug eingebracht werden kann. Daraus ergibt sich u.a. die Möglichkeit, die elektrische Baueinheit 45 mit Kabel 41 fest mit der Fensterscheibe mechanisch zu verbinden und die Fensterscheibe bei der Herstellung des Fahrzeugs in den metallisch leitenden Rahmen einzukleben und das Kabel im Fahrzeug zum Empfänger bzw. Sender zu verlegen. Die bei Einsatz von aktiven Bauelementen in der elektrischen Baueinheit notwendige galvanische Verbindung kann dann an einem beliebigen, für einen solchen Anschluß günstigen Ort im Fahrzeug zwischen dem Schirmleiter des HF-Kabels 41 und der Fahrzeugmasse hergestellt werden. Durch Anschluß des HF-Kabels 41 an das Empfangsgerät erfolgt diese Masseverbindung zwangsweise über die Masseverbindung des Empfängers selbst. Besonders einfach kann die Montage der elektrischen Baueinheit 45 auch nach Einbau des Fensters dadurch erfolgen, daß am Fenster lösbare Kontaktverbindungen vorgesehen sind, in welche die entsprechenden Gegenkontakte der elektrischen Baueinheit 45 eingeclipst werden können.

Die Erfindung wird in der nächstfolgenden Beschreibung in Ausführungsbeispielen anhand der Zeichnungen erläutert. Es zeigen:
Fig. 1: Grundprinzip einer Antenne nach dem Stande der Technik (Fig. 1 in DE 3410415 und den dort angegebenen Bezeichnungen) mit einem Antennenverstärker der dort die Bezeichnung 23 trägt und einem Masseanschluß 22 zur Fahrzeugkarosserie.
Fig. 2a: Antennenanlage nach der Erfindung mit HF-Massebezugspunkt 34, flächigem kapazitiven Element 35 und elektrischer Baueinheit 45 mit passiver HF-Übertragungseinheit 23.
Fig. 2b: Empfangsantennenanlage nach der Erfindung mit aktiver HF-Übertragungseinheit 23 als Antennenverstärker mit als Heizfeld ausgeführte Antennenleiter 2, 24 und der Heizstromzuführung über eine an der leitenden Fläche 49 kontaktierten Leitung und eine hochohmige Induktivität 37.
Fig. 3: LMK-UKW-Empfangsantennenanlage nach der Erfindung mit weiteren Antennenleitem 3 für den LMK-Empfang und den Heizleitern 2, 24 für den UKW-Empfang mit aktiver HF-Übertragungseinheit 23 mit LMK- und UKW-Verstärker und getrennter Zuführung des Heizstroms an beliebiger Stelle 26 der Sammelschiene 24.
Fig. 4: Mechanisch-elektrischer Aufbau der elektrischen Baueinheit 45 der Antenne nach Fig. 3 auf der Fensterscheibe 1 mit lösbar gestaltbaren Kontaktstellen.
Fig. 5a: Prinzip der Gestaltung des flächigen kapazitiven Elementes 35 aus der auf der Fensterscheibe befindlichen leitenden Fläche 49, dem Scheibenkleber 51 und dem leitenden Fensterrahmen 46.
Fig. 5b: Mögliche Form der leitenden Fläche 49 bei Ausgestaltung als Kapazität mit der Breite 54 und der Länge 53 und bevorzugtem Anschlußpunkt für den zweiten Eingangskontakt 36 in der Flächenmitte.
Fig. 5c: Mäanderförmige Gestaltung der leitenden Fläche 49 mit Anschlußpunkt für den zweiten Eingangskontakt 36 an einem Ende zur Gestaltung einer am anderen Ende leerlaufenden Leitungsstruktur zur Schaffung eines hochfrequenten Kurzschlusses zum HF-Massebezugspunkt 34.
Fig. 6: Antennenanlage nach der Erfindung mit heizbarer Heckscheibe und getrennt zugeführtem Heizstrom und getrennt zugeführter Plusversorgung für den Antennenverstärker als aktive HF-Übertragungseinheit 23.
Fig. 7a: Antenne nach Fig. 6, jedoch mit Zuführung des Verstärkergleichstroms über die Klemme 33 und über die Sammelschiene 24.
Fig. 7b: Antenne nach Fig. 7a, jedoch mit Gleichstromzuführung für den Verstärker als HF-Übertragungseinheit 23 über den Innenleiter des HF-Kabels 41 und einer im Empfänger hierfür vorgesehenen Gleichstromquelle.
Fig. 8: Antenne nach Fig. 2b, jedoch mit Gleichstromspeisung des Verstärkers 23 wie in Fig. 7b.

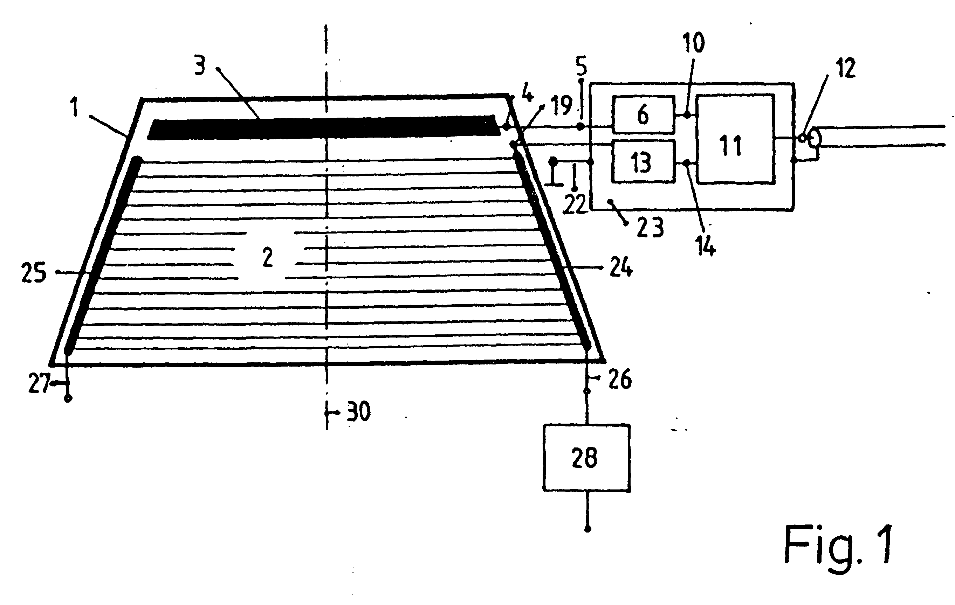

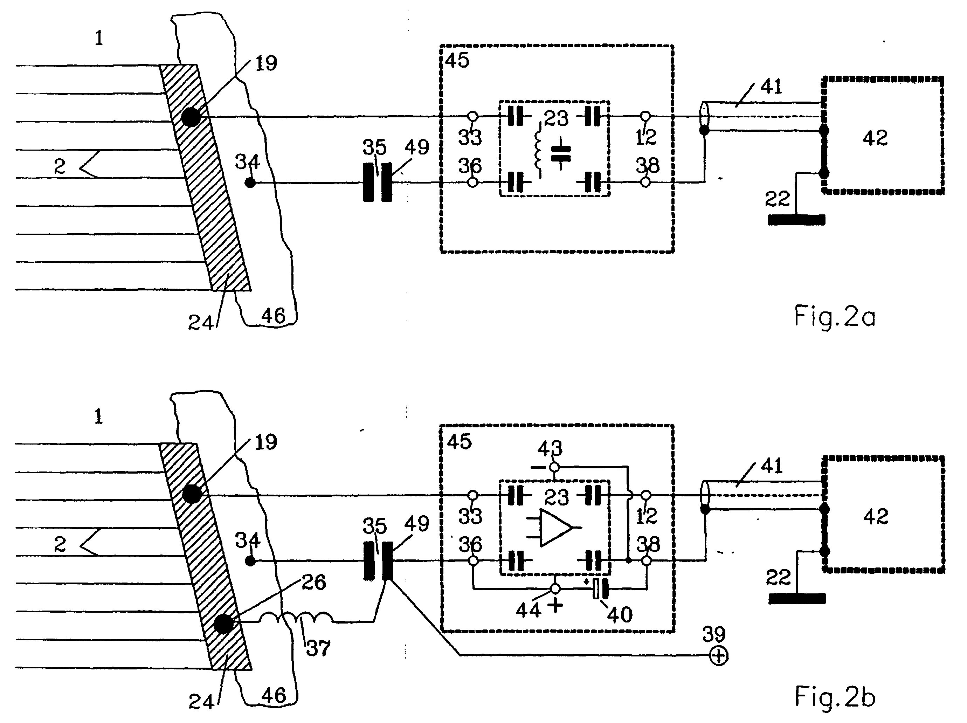

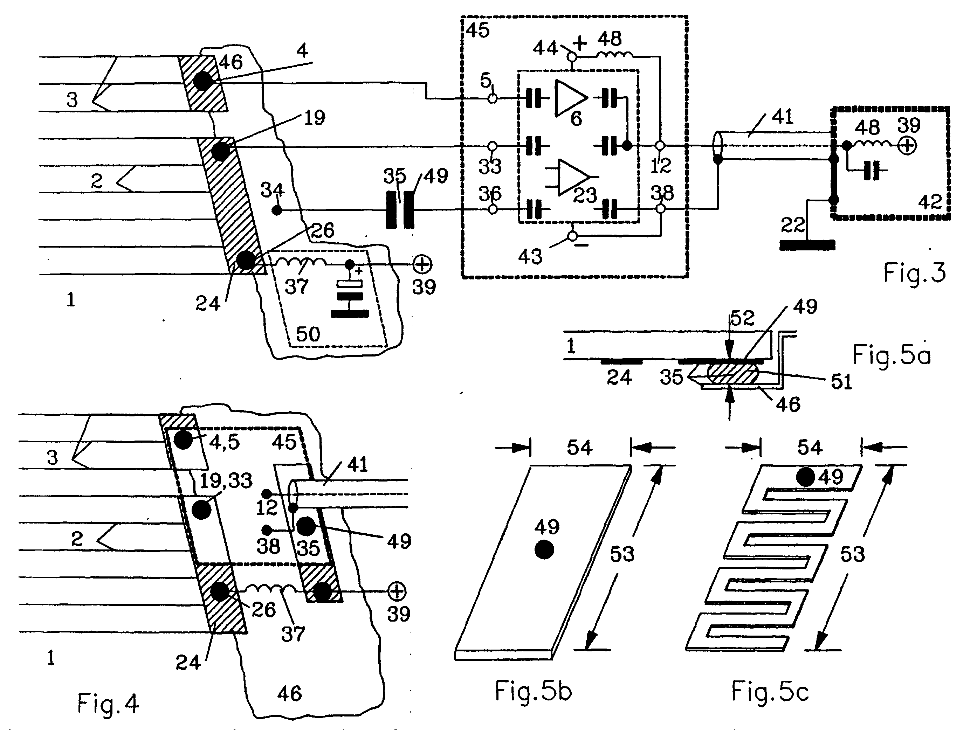

Erfindungsgemäß wird die hochfrequente Masseverbindung für die elektrische Baueinheit 45 und deren zweiten Eingangskontakt 36 mit Hilfe des flächigen kapazitiven Elements 35 hergestellt. In Fig. 2a wird somit die Aufgabe gelöst, zwischen dem auf dem Heckscheibenrahmen 46 befindlichen HF-Massebezugspunkts 34 und dem zweiten Eingangskontakt 36 eine hinreichend niederohmige hochfrequenzmäßige Verbindung zu schaffen. Dies geschieht erfindungsgemäß mit Hilfe der in Fig. 5a bis 5c angegebenen beispielhaften Ausführungsformen des flächigen kapazitiven Elements 35. Aufgrund der relativ hohen Dielektrizitätskonstanten üblicher Scheibenkleber kann diese Hochfrequenzverbindung sehr niederohmig gestaltet werden. Beispielsweise kann die leitende Fläche 49 mit einer Länge 53 von 5 cm bis 7 cm und einer Breite 54 von ca. 1 cm hergestellt werden. Die Kontaktierung des zweiten Eingangskontakts 36 kann dabei an weitgehend beliebiger Stelle auf der Fläche erfolgen. Wird eine besonders niederohmige kapazitive Verbindung gewünscht, so kann die leitende Fläche als Leitungs-Resonanzstruktur gestaltet werden und die Länge 53 z.B. solange gewählt werden, daß sie zusammen mit dem leitenden Heckscheibenrahmen 46 eine elektrische Länge einer Viertelwellenlänge besitzt und der Anschlußpunkt für den zweiten Eingangskontakt 36 auf der HF-Übertragungseinheit 23 an einem Ende dieser Fläche gewählt ist. Zur Verkürzung der geometrischen Länge 53 der leitenden Fläche 49 kann eine Mäanderstruktur wie in Fig. 5c gewählt werden, welche bei Leerlauf an dem einen Ende einen Resonanz-Kurzschluß an ihrem anderen Ende ermöglicht, wo der zweite Eingangskontakt 36 angeschlossen wird. Die geforderte Bandbreite der Resonanz läßt sich über die Breite der gewählten Mäanderlinien einstellen.

Fig. 3 zeigt ein Beispiel zur Gestaltung einer aktiven Empfangsantenne für den LMKU-Bereich mit getrennten Antennenleitern für den LMK-Bereich 3, 4 und für den UKW-Bereich 2, 24. Die elektrische Baueinheit 45 enthält eine HF-Übertragungseinheit 23 mit einem LMK-Verstärker 6 und einem UKW-Verstärker. In diesem Beispiel erfolgt die Heizstromzuführung an einem beliebigen Punkt 26 auf der Sammelschiene 24 über die hochohmige Induktivität 37.

Die Gleichstromzufuhrung für den Verstärker erfolgt über eine dafür vorgesehene Gleichstromquelle im Empfänger und über den Innen- und Außenleiter des Kabels.

Fig. 4 zeigt den mechanisch-elektrischen Aufbau einer Antenne nach der Erfindung in der Ausführungsform für LMK und UKW, ähnlich wie in Fig. 3, in der besonders vorteilhaften Ausgestaltung, in der die elektrische Baueinheit 45 mit Hilfe von lösbaren Druckkontakten der Anschlußpunkte 4, 5, der Anschlußpunkte 34, 36 sowie der Anschlußpunkte 19, 33 angeschlossen und befestigt ist. Das HF-Kabel 41 ist dabei sowohl elektrisch als auch mechanisch mit der elektrischen Baueinheit 45 verbunden. Die Montage der elektrischen Baueinheit auf dem Fenster 1 kann somit durch einfaches Aufdrücken erfolgen. Die mechanische Halterung erfolgt somit auch über die Druckkontakte. Ähnlich wie in Fig. 3 erfolgt die Heizstromzuführung über die hochohmige Induktivität 37, welche zwischen der leitenden Fläche 49 und einem benachbarten Punkt auf der Sammelschiene 24 der Heckscheibenheizung eingeschaltet ist. Die hochohmige Induktivität 37 kann somit ebenfalls bei der Herstellung des Glases eingelötet und mit dem Glas geliefert werden. Die Heizstromversorgung von der Batterie kann über die getrennt, ebenfalls an die leitende Fläche 49 angelötete Zuführungsleitung erfolgen. Diese Leitung sowie der Schirmleiter des HF-Kabels 41 liegen hochfrequenztechnisch dem flächigen kapazitiven Element 35 parallel hin zur Fahrzeugkarosserie. Dieser hochfrequenzmäßige Nebenschluß ist jedoch aufgrund der Eigeninduktivitäten dieser Leiter wirkungslos, wenn der Kapazitätswert, welchen die leitende Fläche 49 zum Heckscheibenrahmen 46 bildet, hinreichend niederohmig gestaltet ist. Im höherfrequenten UKW-Bereich ist dies mit dem oben zur Ausgestaltung der leitenden Fläche 49 Gesagten leicht erreichbar. Damit ist sichergestellt, daß der zweite Eingangskontakt 36 der elektrischen Baueinheit 45 seinen HF-Massebezugspunkt 34 am gewünschten Ort auf dem Heckscheibenrahmen 46 findet. Im niederfrequenteren LMK-Bereich ist dies nicht gleichzeitig notwendigerweise der Fall. In diesem Bereich liefern die kapazitiven Antennenleiter eine Empfangsspannung gegenüber der Fahrzeugkarosserie, wobei aufgrund der großen Wellenlängen in diesem Bereich die Wahl des Massepunkts weniger definiert erfolgen kann. Soll auch in diesem Bereich der HF-Massebezugspunkt 34 an der definierten Stelle wirksam sein, so kann in einer weiteren Ausführungsform der Erfindung durch Einfügung von Ferritmaterial (z.B. Lochkern) um den Außenleiter des HF-Kabels 41 und der Leitung zur Heizstromzuführung der hochfrequenzmäßige Nebenschluß unwirksam gestaltet werden.

Fig. 2b zeigt eine vorteilhafte Variante einer Antenne, welche aus den Heizleitern gebildet ist, und wie sie als UKW-Teil in Fig. 4 dargestellt ist. Hierin erfolgt die Heizstromzufuhr wie in Fig. 4 beschrieben. Zur Glättung von Störimpulsen, welche durch bordeigene Störer der Bordspannung überlagert sind, wird der Kondensator 40 zwischen dem Gleichstromanschluß (plus) 44 und dem zweiten Ausgangskontakt 38 geschaltet. Auf diese Weise lassen sich insbesondere niederfrequentere Störimpulse aussieben. Dies ist insbesondere dann von Bedeutung, wenn die Antenne ähnlich wie in Fig. 3 und Fig. 4 als LMKU-Antenne ausgeführt ist.

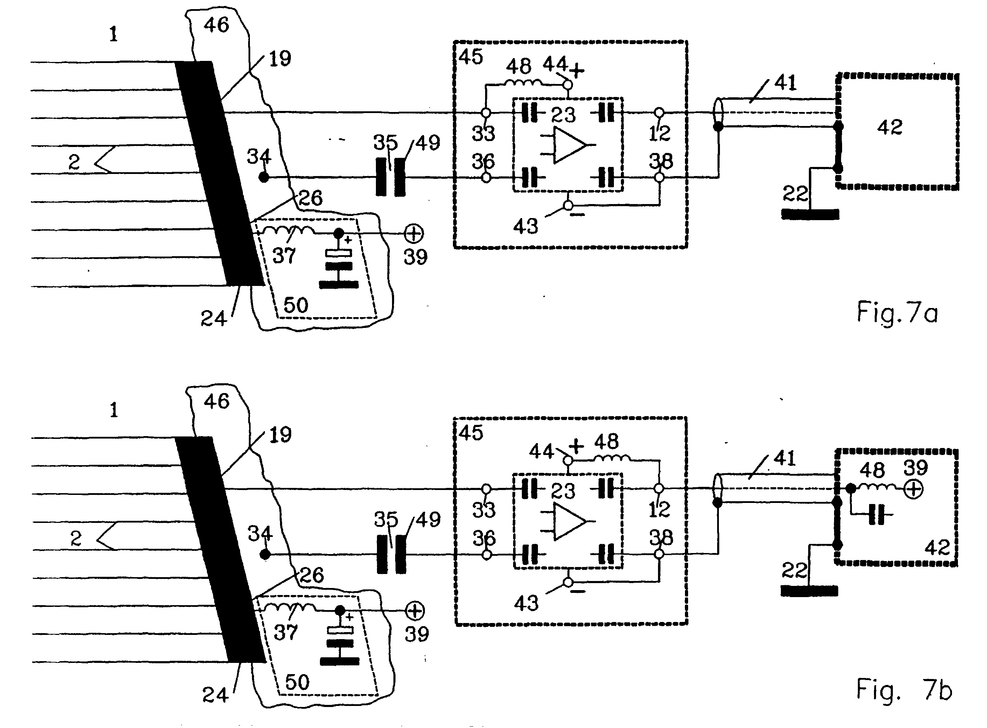

In der in Fig. 6 vorteilhaften Ausgestaltung der Erfindung wird der Heizgleichstrom in der derzeit nach dem Stande der Technik üblichen Form über die hochohmige Induktivität 37 der Sammelschiene 24 zugeführt. Die Gleichstromversorgung für den Verstärker erfolgt an der Klemme 44 getrennt über eine Leitung, welche z.B. parallel zum HF-Kabel geführt werden kann. Die Siebung dieser Spannung kann auf bekannte Weise über einen Kondensator 40 erfolgen.

Fig. 7a zeigt eine Antenne wie in Fig. 6, jedoch wird die Gleichstromzuführung für den Verstärker aus dem an dem ersten Eingangskontakt 33 liegenden Gleichspannungspotential der Sammelschiene 24 gewonnen und über eine Drossel 48 dem Verstärker zugeführt. Fig. 7b zeigt eine weitere Variante zur Zuführung des Verstärkergleichstroms über den Innenleiter des HF-Kabels 41 und einer dafür im Empfänger vorgesehenen Gleichspannungsquelle.

In Fig. 7b ist die Gleichstromspeisung des Verstärkers einer Antenne wie in Fig. 7a, jedoch über das HF-Kabel 41, beschrieben.

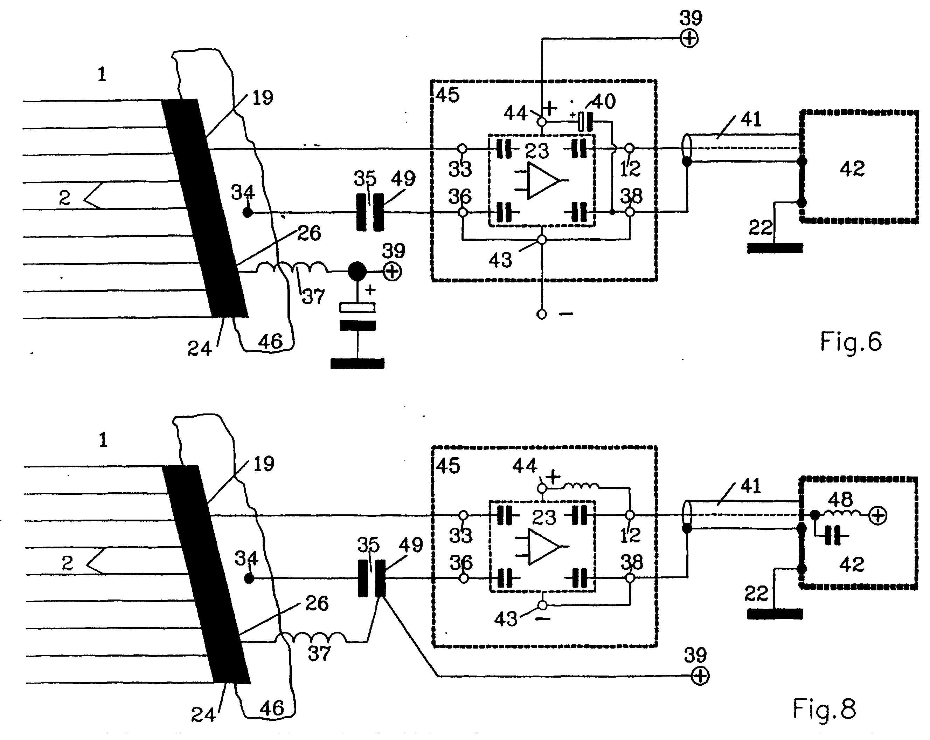

Fig. 8 zeigt eine Antenne, wie sie in Fig. 2b beschrieben ist. Die Gleichstromspeisung erfolgt jedoch über das HF-Kabel 41, wie in Fig. 7b beschrieben.

## Patentansprüche

1. Antennenanlage für den LMKU- und TV-Frequenzbereich in der Fensterscheibe (1) eines Kraftfahrzeugs mit Fensterrahmen (46) mit auf der Fensterscheibe (1) befindlichen Antennenleitern (2, 24) mit einem Antennenleiter-Anschlußpunkt (19) in der Nähe des Fensterrahmens (46) und einer elektrischen Baueinheit (45) und einem zum Empfangs- bzw. Sendegerät führenden HF-Kabel (41), das an seinem einen Ende mit der elektrischen Baueinheit (45) mechanisch verbunden ist, die auf der Fensterscheibe (1) befestigt ist und in der ein erster Eingangskontakt (33) und ein zweiter Eingangskontakt (36) vorhanden sind, wobei zur Bildung einer Antenne der erste Eingangskontakt (33) mit dem Antennenleiter-Anschlußpunkt (19) verbunden ist, während die elektrische Baueinheit (45) Ausgangskontakte (12, 38) aufweist, an die das HF-Kabel (41) mit den an seinem einen Ende befindlichen Anschlüssen angeschlossen ist,
**dadurch gekennzeichnet, daß**
der Fensterrahmen (46) aus leitendem Material besteht und ein HF-Massebezugspunkt (34) auf dem leitenden Fensterrahmen (46) über ein flächiges kapazitives Element (35) mit dem zweiten Eingangskontakt (36) der elektrischen Baueinheit (45) hochfrequenzmäßig verbunden ist,
daß das flächige kapazitive Element (35) dadurch gebildet ist, daß in der Umgebung des HF-Massebezugspunkts (34) eine im wesentlichen entlang der Berandung der Fensterscheibe (1) geführte leitende Fläche (49) im Bereich eines als Dielektrikum wirkenden Scheibenklebers (51) auf der dem leitenden Fensterrahmen (46) und dem Scheibenkleber (51) zugewandten Seite der Fensterscheibe (1) aufgebracht ist,
daß die leitende Fläche (49) in einem kleinen Abstand von dem den Antennenleiter-Anschlußpunkt (19) tragenden Antennenteil (24) und von diesem galvanisch getrennt angeordnet ist,
daß auf der der Fensterscheibe (1) zugewandten Seite der flächig ausgeführten elektrischen Baueinheit (45) Kontaktstellen ausgebildet sind, welche bei befestigter Baueinheit (45) mit den Antennenleiter-Anschlußpunkten (19) bzw. mit der leitenden Fläche (49) in direktem Kontakt stehen und
daß die leitende Fläche (49) nach Größe und Form so gestaltet ist, daß das flächige kapazitive Element (35) hinreichend niederohmig ist.

2. Empfangsantennenanlage nach Anspruch 1,
**dadurch gekennzeichnet, daß**
die Kontaktstellen als Druckkontakte ausgebildet sind, deren Gegenkontakte auf den auf der Fensterscheibe aufgedruckten Leitern aufgelötet sind und somit zwischen der Fensterscheibe und der elektrischen Baueinheit (45) eine lösbare Verbindung gestaltet ist. (Fig. 4)

3. Antennenanlage nach Anspruch 1 oder 2,
**dadurch gekennzeichnet, daß**
die elektrische Baueinheit (45) ein Anpassungsnetzwerk aus passiven elektrischen Bauelementen als HF-Übertragungseinheit (23) enthält, um die zwischen dem Antennenleiter-Anschlußpunkt (19) und dem HF-Massebezugspunkt (34) wirksame Impedanz der Antennenleiter (2, 24) an die Impedanz des HF-Kabels (41) mit Empfangs- bzw. Sendegerät (42) anzupassen. (Fig. 2a)

4. Antennenanlage nach einem der Ansprüche 1 bis 3,
**dadurch gekennzeichnet, daß**
die elektrische Baueinheit (45) als HF-Übertragungseinheit (23) aktive elektronische Bauelemente enthält und eine aktive Empfangsantenne gebildet ist, welche die empfangenen Signale über das HF-Kabel (41) an das Empfangsgerät (42) weiterleitet.

5. Antennenanlage nach Anspruch 1 bis 4,
**dadurch gekennzeichnet, daß**
der Antennenleiter (2, 24) aus einem ersten, durch parallele Heizdrähte (2) gebildeten Antennenleiterteil und einem zweiten Antennenleiterteil, welche durch die Sammelschiene (24) einer Scheibenheizung gebildet ist, besteht, und der Antennenleiter-Anschlußpunkt (19) auf der Sammelschiene (24) angeordnet ist. (Fig. 2b)

6. Antennenanlage nach Anspruch 5,
**dadurch gekennzeichnet, daß**
zwischen einem Punkt auf der Sammelschiene (24) und der leitenden Fläche (49) zur Zuführung des Heizstroms eine hochfrequenzmäßig hochohmige Induktivität (37) geschaltet ist und der elektrische Leiter (39) zur Zuführung des Heizstroms ebenfalls an der leitenden Fläche (49) angeschlossen ist und der Hochfrequenzwiderstand des elektrischen Leiters (39) aufgrund seiner Eigeninduktivifät wesentlich größer ist als der des flächigen kapazitiven Elements (35) (Fig. 2b) und die Gleichstromverbindung der aktiven HF-Übertragungseinheit (23) zur Fahrzeugmasse (22) über den galvanisch mit der Fahrzeugmasse verbundenen Schirmleiter des HF-Kabels (41) erfolgt.

7. Antennenanlage nach Anspruch 6,
**dadurch gekennzeichnet, daß**
die Gleichspannungsversorgung der aktiven HF-Übertragungseinheit (23) durch das über die leitende Fläche (49) an dem zweiten Eingangskontakt (36) vorliegende Gleichspannungspotential gegeben ist. (Fig. 2b)

8. Antennenanlage nach Anspruch 7,
**dadurch gekennzeichnet, daß**
zur Siebung von insbesondere niederfrequenteren Störspannungspulsen in der Bordspannungsversorgung ein Kondensator mit großem Kapazitätswert (40) als Verbindung zwischen dem zweiten Eingangskontakt (36) und dem Schirmleiter des HF-Kabels (41) vorhanden ist. (Fig. 2b)

9. Empfangsantennenanlage nach Anspruch 1 bis 8,
**dadurch gekennzeichnet, daß**
mit Hilfe der Antennenleiter (2, 24) eine Antenne in einem höheren Frequenzbereich gebildet ist und weitere Antennenleiter (3) mit einem dem Antennenleiter-Anschlußpunkt (19) benachbarten weiteren Antennenleiter-Anschlußpunkt (4) zur Bildung einer Antenne in einem niederfrequenteren Bereich vorhanden sind und in der HF-Übertragungseinheit (23) neben einem ersten Signalweg für die höheren Frequenzen ein zweiter Signalweg (6) für die niedrigeren Frequenzen mit einem ersten Eingangskontakt (5) ausgebildet ist, wobei dessen erster Eingangskontakt (5) mit dem weiteren Antennenleiter-Anschlußpunkt (4) verbunden ist und dessen zweiter Eingangskontakt hochfrequenzmäßig mit dem zweiten Eingangskontakt (36) des ersten Signalwegs identisch ist und der zweite Signalweg (6) an seinem Ausgang ebenfalls an das HF-Kabel (41) angeschlossen ist. (Fig. 3)

10. Empfangsantennenanlage nach Anspruch 4, 5 und 9,
**dadurch gekennzeichnet, daß**
die Heizstromzuführung zur Sammelschiene (24) auf an sich bekannte Weise an einem beliebig gewählten Anschlußpunkt (26) mit Hilfe einer hochfrequenzmäßig hochohmigen Induktivität (37) erfolgt und die Gleichstromversorgung der HF-Übertragungseinheit (23) auf an sich bekannte Weise über den Schirm- und Signalleiter des HF-Kabels (41) oder durch einen externen vom HF-Kabel (41) getrennt geführten Leiter, oder mit Hilfe einer Drossel (48) zwischen dem ersten Eingangskontakt (33) und dem Gleichstromanschluß (plus) (44) und der Gleichstromanschluß (minus) (43) der aktiven HF-Übertragungseinheit (23) galvanisch über den Schirmleiter des HF-Kabels (41) mit der Fahrzeugmasse galvanisch verbunden ist. (Fig. 3, 7b, 6, 7a)

11. Empfangsantennenanlage nach Anspruch 1 bis 10,
**dadurch gekennzeichnet, daß**
die leitende Fläche (49) als längliches Rechteck ausgeführt ist und dessen Breite (54) und dessen Länge (53) so bemessen ist, daß der Kapazitätswert, der sich mit dieser Fläche und dem Heckscheibenrahmen (46) unter dem Einfluß des Scheibenklebers (51) ergibt, hinreichend groß ist und der Blindwiderstand des flächigen kapazitiven Elements (35) bei der Betriebsfrequenz so klein ist, daß die durch den Schirmleiter des HF-Kabels (41) gebildete Impedanz zur Karosseriemasse (22) im Vergleich hierzu hochohmig ist. (Fig. 5a, 5b)

12. Empfangsantennenanlage nach Anspruch 1 bis 10,
**dadurch gekennzeichnet, daß**
die leitende Fläche (49) im wesentlichen als längliches Rechteck ausgeführt ist und der Antennenleiter-Anschlußpunkt (19) an einem Ende über dem HF-Massebezugspunkt (34) des Rechtecks gewählt ist und zusammen mit dem Heckscheibenrahmen (46) eine elektrische Leitung bildet und die Länge (53) der Leitung so gewählt ist, daß ihre elektrische Länge unter Berücksichtigung der Dielektrizitätskonstanten des Scheibenklebers eine Viertelwellenlänge im Betriebsfrequenzbereich beträgt und somit eine hochfrequenzmäßig niederohmige Verbindung zwischen dem zweiten Eingangskontakt (36) und dem HF-Massebezugspunkt (34) gestaltet ist.

13. Empfangsantennenanlage nach Anspruch 12,
**dadurch gekennzeichnet, daß**
zur geometrischen Verkürzung der Länge des Rechtecks die leitende Fläche (49) als eine mäanderförmige Struktur gestaltet ist. (Fig. 5c)

## Claims

1. Aerial arrangement for the AM/FM and TV frequency range in the windscreen (1) of a motor vehicle with window frames (46) having aerial leads (2, 24) located on the windscreen (1), with an aerial lead connection point (19) close to the window frame (46) and an electrical assembly (45) and an RF cable (41) leading to the receiver or transmitter, said cable (41) being mechanically connected at one end to the electrical assembly (45) which is secured to the windscreen (1), and wherein a first input contact (33) and a second input contact (36) are provided, while to form an aerial the first input contact (33) is connected to the aerial lead connection point (19), while the electrical assembly (45) has output contacts (12, 38) to which the RF cable (41) is connected by the connectors located at one of its ends,
**characterised in that**
the window frame (46) is made of conductive material and an RF earth reference point (34) on the conductive window frame (46) is connected by a high frequency connection, via a flat capacitive element (35), to the second input contact (36) of the electrical assembly (45),
the flat capacitive element (35) is formed by the provision, in the area around the RF earth reference point (34), of a conductive surface (49) extending substantially along the edge of the windscreen (1) in the region of a windscreen adhesive (51) acting as a dielectric, on the side of the windscreen (1) facing the conductive window frame (46) and the windscreen adhesive (51),
the conductive surface (49) is arranged at a small spacing from the part (24) of the aerial carrying the aerial lead connection point (19) and is galvanically separated therefrom,
on the side of the flat electrical assembly (45) facing the windscreen (1) there are contacts which, when the assembly (45) is secured, are in direct contact with the aerial lead connection points (19) or with the conductive surface (49), and
the conductive surface (49) is of a size and shape such that the flat capacitive element (35) is sufficiently low-impedance.

2. Receiving aerial arrangement according to claim 1,
**characterised in that** the contacts are in the form of pressure contacts the mating contacts of which are soldered on the leads printed on the windscreen and in this way a detachable connection is formed between the windscreen and the electrical assembly (45). (Fig. 4)

3. Aerial arrangement according to claim 1 or 2,
**characterised in that** the electrical assembly (45) contains an adapting network consisting of passive electrical components as the RF transmission unit (23), for adapting the impedance of the aerial leads (2, 24) which is effective between the aerial lead connection point (19) and the RF earth reference point (34) to the impedance of the RF cable (41) with the receiver or transmitter (42). (Fig. 2a)

4. Aerial arrangement according to one of claims 1 to 3, **characterised in that** the electrical assembly (45) contains active electronic components as the RF transmission unit (23) and an active receiving aerial is formed which transmits the signals received through the RF cable (41) to the receiver (42).

5. Aerial arrangement according to claim 1 to 4,
**characterised in that** the aerial lead (2, 24) consists of a first aerial lead portion formed by parallel heating wires (2) and a second aerial lead portion which is formed by the busbar (24) of a windscreen heater, and the aerial lead connection point (19) is provided on the busbar (24). (Fig. 2b)

6. Aerial arrangement according to claim 5,
**characterised in that** a high frequency high-impedance inductance (37) is connected between a point on the busbar (24) and the conductive surface (49), in order to supply the heating current, and the electric lead (39) for supplying the heating current is also connected to the conductive surface (49), and because of its self-inductance the high frequency resistance of the electric lead (39) is substantially greater than that of the flat capacitive element (35) (Fig. 2b) and the d.c. connection of the active RF transmission unit (23) to the vehicle mass (22) is effected by means of the screening lead of the RF cable (41) which is galvanically connected to the vehicle mass.

7. Aerial arrangement according to claim 6,
**characterised in that** the supply of d.c. voltage to the active RF transmission unit (23) is provided by the d.c. voltage potential present at the second input contact (36) through the conductive surface (49). (Fig. 2b)

8. Aerial arrangement according to claim 7,
**characterised in that** in order to screen out in particular low frequency interference voltage pulses in the vehicle's voltage supply, a capacitor with a high capacitance value (40) is provided as the connection between the second input contact (36) and the screening lead of the RF cable (41). (Fig. 2b)

9. Receiving aerial arrangement according to claims 1 to 8, **characterised in that** with the aid of the aerial leads (2, 24) an aerial is formed in a higher frequency range and other aerial leads (3) with another aerial lead connection point (4) adjacent to the aerial lead connection point (19) are provided to form an aerial in a lower-frequency range, and in the RF transmission unit (23), in addition to a first signal path for the higher frequencies, a second signal path (6) for the lower frequencies is formed with a first input contact (5), the first input contact (5) of which is connected to the additional aerial lead connection point (4) and the second input contact of which is identical, at high frequency, to the second input contact (36) of the first signal path and the second signal path (6) is also connected to the RF cable (41) at its output. (Fig. 3)

10. Receiving aerial arrangement according to claims 4, 5 and 9, **characterised in that** the supply of heating current to the busbar (24) is effected, in a manner known *per se,* at any selected connection point (26), by means of a high frequency high-impedance inductance (37) and the supply of d.c. current to the RF transmission unit (23) is galvanically connected, in a manner known *per se,* via the screening and signal lead of the RF cable (41) or by an external lead running separately from the RF cable (41), or with the aid of a reactance coil (48) between the first input contact (33) and the d.c. connection (plus) (44) and the d.c. connection (minus) (43) of the active RF transmission unit (23), galvanically, via the screening lead of the RF cable (41), to the vehicle mass. (Figs. 3, 7b, 6, 7a)

11. Receiving aerial arrangement according to claims 1 to 10, **characterised in that** the conductive surface (49) is constructed as an elongate rectangle and its width (54) and length (53) are such that the capacitance which is obtained with this surface and the rear window frame (46) under the influence of the windscreen adhesive (51) is sufficiently great and the reactance of the flat capacitive element (35) at the operating frequency is so low that the impedance formed by the screening lead of the RF cable (41) to the mass of the vehicle body (22) is high-impedance by comparison. (Fig. 5a, 5b)

12. Receiving aerial arrangement according to claims 1 to 10, **characterised in that** the conductive surface (49) is constructed essentially as an elongate rectangle and the aerial lead connecting point (19) at one end is selected via the RF earth reference point (34) of the rectangle and together with the rear window frame (46) forms an electric lead and the length (53) of the lead is chosen so that its electrical length is a quarter wavelength in the operating frequency range, taking into account the dielectric constants of the windscreen adhesive, and in this way a high frequency low-impedance connection is formed between the second input contact (36) and the RF earth reference point (34).

13. Receiving aerial arrangement according to claim 12, **characterised in that** to shorten the length of the rectangle geometrically, the conductive surface (49) is constructed as a meandering shape. (Fig. 5c)

## Revendications

1. Installation d'antennes pour la plage de fréquences GO/MO/PO/FM et TV dans la vitre de fenêtre (1) d'un véhicule à moteur doté de cadre de fenêtre (46), avec des conducteurs d'antenne (2, 24) disposés sur la vitre de fenêtre (1) avec un point de connexion des conducteurs d'antenne (19) à proximité du cadre de fenêtre (46) et une unité de construction électrique (45) et un câble HF (41) menant à l'appareil émetteur-récepteur et relié de façon mécanique à une extrémité à l'unité de construction électrique (45), laquelle est fixée sur la vitre de fenêtre (1) et comprend un premier contact d'entrée (33) et un second contact d'entrée (36), le premier contact d'entrée (33) étant relié au point de connexion des conducteurs d'antenne (19) pour former une antenne, tandis que l'unité de construction électrique (45) présente des contacts de sortie (12, 38) sur lesquels le câble HF (41) est raccordé par les connecteurs qui se trouvent à l'une de ses extrémités, **caractérisée en ce que**
le cadre de fenêtre (46) est composé de matériau conducteur et un point de masse de référence HF (34) situé sur le cadre de fenêtre (46) conducteur est connecté à haute fréquence au moyen d'un élément capacitif plat (35) avec le second contact d'entrée (36) de l'unité de construction électrique (45),
**en ce que** l'élément capacitif plat (35) est formé par le fait qu'une surface conductrice (49) passant sensiblement le long de la bordure de la vitre de fenêtre (1) est appliquée au voisinage du point de référence de masse HF (34) au niveau d'un adhésif de vitre (51) faisant office de diélectrique sur la face de la vitre de fenêtre (1) orientée vers le cadre de fenêtre conducteur (46) et l'adhésif de vitre (51),
**en ce que** la surface conductrice (49) est disposée à faible distance de la partie d'antenne (24) portant le point de connexion des conducteurs d'antenne (19) et en séparation galvanique par rapport à celle-ci,
**en ce que** la face de l'unité de construction électrique (45) plate orientée vers la vitre de fenêtre (1) est pourvue de points de contact qui se trouvent en contact direct avec les points de connexion des conducteurs d'antenne (19) ou avec la surface conductrice (49) lorsque l'unité de construction (45) est fixée, et
**en ce que** la surface conductrice (49) a une taille et une forme telles que l'élément capacitif plat (35) ait une impédance suffisamment basse.

2. Installation d'antennes de réception selon la revendication 1, **caractérisée en ce que** les points de contact sont conçus comme des contacts imprimés dont la partie complémentaire est brasée sur les conducteurs imprimés sur la vitre de fenêtre, ce qui crée une connexion amovible entre la vitre et l'unité de construction électrique (45) (Figure 4).

3. Installation d'antennes selon la revendication 1 ou 2, **caractérisée en ce que** l'unité de construction électrique (45) contient un réseau d'adaptation composé d'éléments électriques passifs et servant d'unité de transmission HF (23), afin d'adapter l'impédance des conducteurs d'antenne (2, 24) agissant entre le point de connexion des conducteurs d'antenne (19) et le point de masse de référence HF (34) à l'impédance du câble (41) avec l'appareil émetteur-récepteur (42) (Figure 2a).

4. Installation d'antennes selon l'une ou l'ensemble des revendications 1 à 3, **caractérisée en ce que** l'unité de construction électrique (45) contient des éléments électroniques actifs formant l'unité de transmission HF (23), et une antenne de réception active transmettant les signaux reçus à l'appareil récepteur (42) via le câble HF (41) est formée.

5. Installation d'antennes selon les revendications 1 à 4, **caractérisée en ce que** le conducteur d'antenne (2, 24) se compose d'une première partie de conducteur d'antenne formée de fils chauffants parallèles (2) et d'une seconde partie d'antenne formée par la barre collectrice (24) d'un chauffage de vitre, et le point de connexion des conducteurs d'antenne (19) est disposé sur la barre collectrice (24) (Figure 2b).

6. Installation d'antennes selon la revendication 5, **caractérisée en ce qu'**une inductance (37) de haute impédance à haute fréquence est montée entre un point sur la barre collectrice (24) et la surface conductrice (49) pour acheminer un courant de chauffage et le conducteur électrique (39) servant à acheminer le courant de chauffage est également connecté à la surface conductrice (49) et la résistance à haute fréquence du conducteur électrique (39) est sensiblement plus grande, du fait de son inductance propre, que celle de l'élément capacitif plat (35) (Figure 2b) et la connexion de courant continu entre l'unité de transmission HF active (23) et la masse du véhicule (22) passe par le conducteur de blindage du câble HF (41) relié de façon galvanique à la masse du véhicule.

7. Installation d'antennes selon la revendication 6, **caractérisée en ce que** l'alimentation en courant continu de l'unité de transmission HF active (23) passe par la surface conductrice (49) vers le potentiel de courant continu du second contact d'entrée (36) (Figure 2b).

8. Installation d'antennes selon la revendication 7,**caractérisée en ce qu'**en vu du filtrage des impulsions de tension parasites à basse fréquence, en particulier, il est prévu dans l'alimentation électrique de bord un condensateur à grande capacité (40) assurant la liaison entre le second contact d'entrée (36) et le conducteur de blindage du câble HF (41) (Figure 2b).

9. Installation d'antennes de réception selon les revendications 1 à 8, **caractérisée en ce que** les conducteurs d'antenne (2, 24) forment une antenne à plage de fréquences haute et d'autres conducteurs d'antenne (3) avec un autre point de connexion des conducteurs d'antenne (4) voisin du point de connexion des conducteurs d'antenne (19) sont prévus pour former une antenne à plage de fréquences basse et l'unité de transmission HF (23) comprend, outre un premier trajet de signaux pour les hautes fréquences, un second trajet de signaux (6) pour les fréquences plus basses avec un premier contact d'entrée (5), ce premier contact d'entrée (5) étant relié à l'autre point de connexion des conducteurs d'antenne (4) et identique à haute fréquence au second contact d'entrée (36) du premier trajet de signaux et le second trajet de signaux (6) étant lui aussi connecté à sa sortie sur le câble HF (41) (Figure 3).

10. Installation d'antennes de réception selon les revendications 4, 5 et 9, **caractérisée en ce que** l'arrivée du courant de chauffage sur la barre collectrice (24) se fait de manière connue en un point de connexion (26) quelconque avec l'aide d'une inductance (37) de haute impédance à haute fréquence et l'alimentation en courant continu de l'unité de transmission HF (23) se fait de manière connue par le conducteur de blindage et de signal du câble HF (41) ou par un conducteur séparé et extérieur au câble HF (41), ou par une bobine de self (48) disposée entre le premier point de contact (33) et la connexion de courant continu (plus) (44) et la connexion de courant continu (moins) (43) de l'unité de transmission HF active (23) est reliée de façon galvanique à la masse du véhicule via le conducteur de blindage du câble HF (41) (Figures 3, 7b, 6, 7a).

11. Installation d'antennes de réception selon les revendications 1 à 10, **caractérisée en ce que** la surface conductrice (49) est conformée comme un rectangle allongé et sa largeur (54) et sa longueur (53) sont telles que la capacité obtenue avec cette surface et le cadre de vitre arrière (46) sous l'influence de l'adhésif de vitre (51) soit suffisamment élevée et la réactance de l'élément capacitif plat (35) suffisamment basse à la fréquence de fonctionnement pour que l'impédance créée vers la masse de la carrosserie (22) à travers le conducteur de blindage du câble HF (41) soit élevée en comparaison (Figures 5a, 5b).

12. Installation d'antennes de réception selon les revendications 1 à 10, **caractérisée en ce que** la surface conductrice (49) est conformée comme un rectangle allongé et le point de connexion des conducteurs d'antenne (19) est disposé à une extrémité au-dessus du point de masse de référence HF (34) du rectangle et forme avec le cadre de vitre arrière (46) une ligne électrique dont la longueur (53) est telle que sa longueur électrique représente, compte tenu des constantes diélectriques de l'adhésif de vitre, un quart de la longueur d'ondes dans la plage de fréquences de fonctionnement et qu'il se forme ainsi une liaison de basse impédance à haute fréquence entre le second contact d'entrée (36) et le point de masse de référence HF (34).

13. Installation d'antennes de réception selon la revendication 12, **caractérisée en ce qu'**afin de raccourcir la longueur géométrique du rectangle, la surface conductrice (49) est conformée comme une structure en méandres (Figure 5c).
